# EUROPEAN PATENT SPECIFICATION

(11) **EP 0 359 340 B1**
(45) Date of publication and mention of the grant of the patent: **16.03.1994**
(21) Application number: 89202337.5
(22) Date of filing: 15.09.1989
(51) Int. Cl.: C08G 73/06

(54) **Spirodilactam polymers**
Spirodilactampolymere
Polymères de spirodilactame

(30) Priority: 16.09.1988 US 245432; 23.02.1989 US 314513; 15.12.1988 US 284872; 05.12.1988 US 279610
(43) Date of publication of application: 21.03.1990
(73) Proprietor: SHELL INTERNATIONALE RESEARCH MAATSCHAPPIJ B.V., 2596 HR Den Haag (NL)
(72) Inventor: Wang, Pen Chung, Houston Texas 77079 (US)

(56) References cited:
- EP-A- 0 336 475
- US-A- 4 064 086
- US-A- 4 847 388
- PATENT ABSTRACTS OF JAPAN vol. 10, no. 63 (C-332)(2120) 13 March 1986,& JP-A-60 202123

## Description

This invention relates to spirodilactam polymers.

The class of polyamide polymers is broadly well known in the art. A commercial example of this class of polymers is the polyamide illustratively produced from hexamethylenediamine and adipic acid known as Nylon 66. Because of the relatively low melting point or glass transition temperatures exhibited by many polymeric polyamides, the latter are not generally useful as engineering thermoplastics where exposure to elevated temperatures is likely to be encountered. It would be of advantage to provide novel linear polymers having amide groups in the backbone that have a high glass transition temperature.

A 1,6-diaza[4,4]spirodilactam polymer of the repeating formula 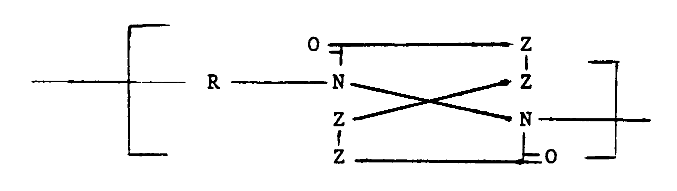
wherein each Z independently is 〉C(Z′)₂ in which each Z′ independently is hydrogen, C₁-C₄ alkyl or halogen or such that two adjacent Z atoms taken together are part of a benzene ring, R is a divalent organic group of up to 30 carbon atoms selected from divalent alkylene, divalent arylene of from 1 to 2 aromatic rings which, when two rings are present, are connected by a direct valence bond or by an alkylene group of up to 8 carbon atoms, or by an oxo, thio, sulphonyl, carbonyl, dioxyphenylene, 2,2-di(oxyphenyl)propane, di(oxyphenyl)sulphone or dioxydiphenylene atom or group.

A further aspect of this invention is concerned with novel polymers having the repeating formula marked above wherein part of the groups R have been substituted by a group selected from 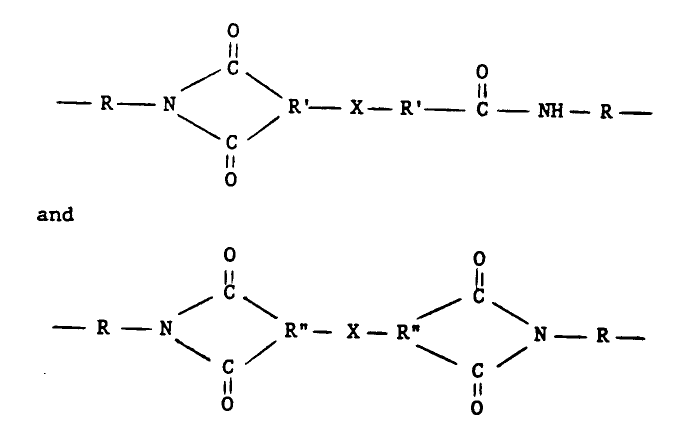
in which R′ is a benzene or naphthalene ring structure, R˝ is an alkylene or haloalkylene group of up to 8 carbon atoms and X is R′, R˝ or an aromatic group of up to 4 aromatic rings which, when at least two rings are present are connected by a direct valence bond or by an alkylene group of up to 8 carbon atoms or by an oxo, thio, sulphonyl, carbonyl, oxocarbonyl, dioxyphenylene, 2,2-di(oxyphenyl)propane, di(oxyphenyl)sulphone or dioxydiphenylene atom or group. Thus, the latter polymers are terpolymers comprising moieties derived from tricarboxylic acids, respectively tetracarboxylic acids.

The novel copolymers and terpolymers can be prepared by reacting a spirodilactam precursor selected from 4-oxo heptanedioic compounds and 1,6-dioxaspiro[4,4]nonane-2,7-dione compounds with a primary diamine having the formula H₂N-R-NH₂ in which the two amine groups are not on adjacent carbon atoms in the optional copresence of appropriate tri- or tetracarboxylic acids or with anhydrides thereof.

Whilst the aforesaid 4-oxoheptanedioic acid compound may comprise a variety of substituents in addition to the oxo moiety and the carboxy functions, the preferred 4-oxoheptanedioic acid compounds have up to 30 carbon atoms and are represented by the formula 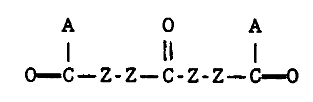
wherein A independently is hydroxy, alkoxy, preferably lower alkoxy of up to 4 carbon atoms, or halo, preferably chloro or bromo, and Z independently is C(Z′)₂ in which each Z′ independently is hydrogen, C₁-C₄ alkyl, preferably methyl, or halogen, preferably chloro, or such that two adjacent Z atoms taken together form a benzene ring.

Suitable 4-oxoheptanedioic acid compounds include
4-oxoheptanedioic acid, dimethyl 4-oxoheptanedioate,
2,6-dimethyl-4-oxoheptanedioic acid,
2,3,5,6-tetramethyl-4-oxoheptanedioyl chloride, di-n-propyl 2,6-di-n-butyl-4-oxoheptanedioic acid and 7-carbomethoxy-3,3,5,5-tetramethyl-4-oxoheptanoic acid. The preferred ketodiacids are those wherein each Z′ is hydrogen or methyl, especially hydrogen, and each A is hydroxy or methoxy, especially hydroxy. Other suitable 4-oxoheptanedioic compounds include di(2-carboxyphenyl)ketone and di(3-chlorocarbonylphenyl)ketone.

Other suitable spirodilactam precursors are 1,6-dioxaspiro[4,4]nonane-2,7-dione compounds which are represented by the formula 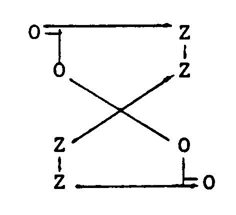
wherein Z has the previously stated significance.

Illustrative of such spirodilactones are 1,6-dioxaspiro[4,4]nonane-2,7-dione, 3,8-dimethyl-1,6-dioxaspiro[4,4]nonane-2,7-dione, 3,4,8,9-tetramethyl-1,6-dioxaspiro[4,4]nonane-2,7-dione,
4,9-diethyl-1,6-diazaspiro[4,4]nonane-2,7-dione,
3,3,8,8-tetramethyl-1,6-dioxaspiro[4,4]nonane-2,7-dione,
3,3,4,4,8,8,9,9-octamethyl-1,6-dioxaspiro[4,4]nonane-2,7-dione,
3,4,8,9-tetrafluoro-1,6-dioxaspiro[4,4]nonane-2,7-dione,
3,4,8,9-dibenzol-1,6-dioxaspiro[4,4]nonane-2,7-dione, and
3,4,8,9-di(4-methylbenzo)-1,6-dioxaspiro[4,4]nonane-2,7-dione.

Preferred spirodilactam precursors are 4-oxoheptanedioic acid, 1,6-dioxaspiro[4,4]nonane-2,7-dione and 3,4,8,9-dibenzo-1,6-dioxaspiro[4,4]nonane-2,7-dione.

The spirodilactam precursor is reacted according to the process of the invention with a primary diamine, that is, an organic compound having two primary amino groups, it being understood that the two amino groups should not be attached to adjacent carbon atoms.

One such class of primary diamines are represented by the formula

H₂N―R―NH₂

where R is a divalent organic radical of up to 30 carbon atoms, selected from divalent alkylene, divalent arylene of from 1 to 2 aromatic rings, which, when two aromatic rings are present, are connected by a direct valence bond, or by an alkylene group of up to 8 carbon atoms or by an oxo, thio, sulphonyl, carbonyl, dioxyphenylene, i.e., 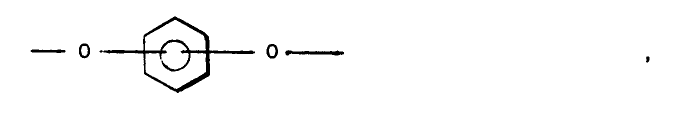
2,2-di(oxyphenyl)propane, i.e., 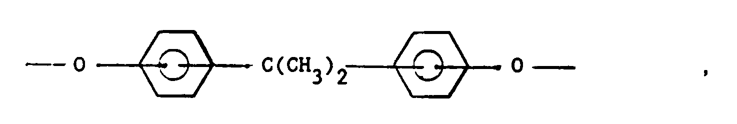
di(oxyphenyl)sulphone, i.e., 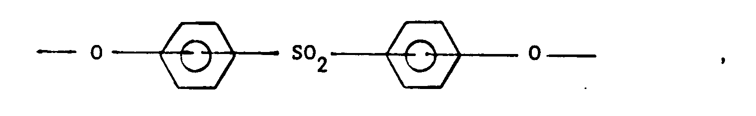
or dioxydiphenylene, i.e., 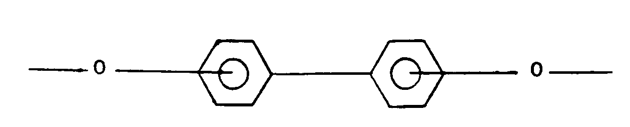
Illustrative of alkylene-containing diamines of the above formula are trimethylenediamine, tetramethylenediamine, hexamethylenediamine, octamethylenediamine, 1,7-diamino-4-methyloctane, 1,4-diaminocyclohexane, di(4-aminocyclohexyl)methane, dodecamethylenediamine and 1,6-diamino-3,4-diethylhexane. Arylene diamines of the above formula include 1,4-phenylenediamine, 2,4-toluenediamine, 4,4′-diaminobiphenyl, 1,5-diaminonaphthalene, di(3-aminophenyl)ether, di(4-aminophenyl)methane, 2,2-di(3-amino-4-methylphenyl)propane, di(4-amino-2-ethylphenyl)sulphone, di(3-amino-4-chlorophenyl)ketone, 1,3-di(3-aminophenyloxy)benzene, 2,2-di(4-aminophenyloxyphenyl)propane and
4,4′-di(4-aminophenyloxy)biphenyl. The preferred primary diamines are those where R is divalent arylene. Particularly preferred are the di(aminophenyl)alkanes, especially the di(4-aminophenyl)alkanes such as di(4-aminophenyl)methane or 1,2-di(4-aminophenyl)ethane or 2,2-di(4-aminophenyl)propane.

In the reaction mixture the spirodilactam precursor and the primary diamine are employed in molar ratios of from about 2:1 to about 1:2. Although mixtures of several primary amine reactants and several spirodilactam precursors are suitably employed to produce a polymeric polyamide of varying moieties, best results are obtained when a single diamine and a single spirodilactam precursor are used. To produce the linear, alternating polymeric polyamides of the invention, the primary amine and the spirodilactam precursor react in a 1:1 molar ratio and the use of reactant ratios that are substantially stoichiometric, i.e., substantially 1:1, are preferred. During reaction, reactant contact is maintained by conventional methods such as by shaking, stirring or refluxing and the reaction is conducted in a liquid phase in the presence of an inert reaction diluent. Diluents which are inert to the reactants and the polyamide product and which are capable of dissolving the reactants, at least at reaction temperature, are satisfactory. Suitable diluents include ketones such as methyl isobutyl ketone and di-isopropyl ketone, esters such as ethyl 2-ethylhexanoate, ethers including acyclic ethers such as diethylene glycol diethyl ether and tetraethylene glycol dimethyl ether as well as cyclic ethers such as dioxane and tetrahydrofuran, phenols such as phenol and the cresols, particularly m-cresol, N-alkylamides such as N,N-dimethylacetamide, N,N-dimethylformamide and N-methyl-2-pyrrolidone and sulphur-containing diluents such as dimethyl sulphoxide and sulfolane. It is particularly convenient to employ as a reaction diluent, either alone or in conjunction with other suitable diluents, an inert organic diluent which forms an azeotrope with water, e.g., benzene, toluene, xylene, ethylbenzene or halogenated benzenes such as chlorobenzene. This procedure facilitates the polymerization reaction and also allows the by-product water to be removed as a generally low-boiling azeotrope.

The reaction of the primary diamine and the spirodilactam precursor takes place in a suitable reactor under polymerization conditions. Suitable reaction temperatures are elevated temperatures from 40 °C to 300 °C but preferably from 150 °C to 250 °C. Suitable reaction pressures are sufficient to maintain the reaction mixture in a liquid phase at reaction temperatures. Such pressures are pressures of up to 20 atmospheres but more generally are pressures from 0.8 atmospheres to 5 atmospheres. Subsequent to reaction, the polymeric polyamide product is recovered from the product mixture by conventional methods such as selective extraction, fractional distillation or precipitation.

The tricarboxylic and tetracarboxylic acids or anhydrides thereof that may participate in the polymerization reaction to form terpolymers are selected from the compounds producing the polymer moieties defined above.

Illustrative of the aromatic tricarboxylic acid compounds which are useful in the process of the invention are
1,2,4-benzenetricarboxylic acid (trimellitic acid), trimellitic anhydride, 1,2,4'-tricarboxybiphenyl,
4-(4-carboxyphenyloxy)phthalic acid, 1,2,5-naphthalenetricarboxylic acid, 4-(4-carboxyphenylthio)phthalic anhydride,
2-(3,4-dicarboxyphenyl)-2-(4-carboxyphenyl)propane,
4-[4-(4-carboxyphenyloxy)phenyloxy]phthalic acid,
4-(3-carboxybenzoyl)phthalic anhydride and
4-[1-(4-carboxynaphthyl)phthalic anhydride. Trimellitic acid or trimellitic anhydride are most preferred.

Illustrative of the tetracarboxylic acid compounds are aliphatic tetracarboxylic acid compounds such as
1,2,3,4-butanetetracarboxylic acid, 1,2,3,4-pentanetetracarboxylic acid, 1,2,4,5-cyclohexanetetracarboxylic acid,
1,2,3,4-butanetetracarboxylic acid dianhydride,
1,2,3,4-cyclobutanetetracarboxylic acid,
1,2,5,6-cycloocta-1,5-dienetetracarboxylic acid dianhydride and 2,2-di(carboxymethyl)-1,3-propanedicarboxylic acid; aromatic tetracarboxylic acid compounds such as
1,2,4,5-benzenetetracarboxylic acid, 1,2,4,5-benzenetetracarboxylic acid dianhydride, 4,5-dicarboxyphthalic anhydride,
3,3,'4,4'-benzophenonetetracarboxylic acid,
2,2-bis(3,4-dicarboxyphenyl)hexafluoropropane,
bis(3,4-dicarboxyphenyl)ether dianhydride,
1,2,5,6-naphthalenetetracarboxylic acid dianhydride,
2,2',3,3'-biphenyltetracarboxylic acid,
3,3',4,4'-biphenyltetracarboxylic acid dianhydride,
bis(3,4-dicarboxyphenyl)thioether, bis(3,4-dicarboxyphenyl)sulphone dianhydride, 1,4-bis(3,4-dicarboxyphenyloxy)benzene, 1,3-bis(3,4-dicarboxybenzoyl)benzene dianhydride, 1,6-bis(2,3-dicarboxyphenyl)hexane, 2,2-[4-(2,3-dicarboxybenzoyloxy)-3,5-dibromophenyl]propane, 4,4'-bis(2,3-dicarboxybenzoyloxy)-3,3',5,5'-tetramethylbiphenyl dianhydride and bis[4-(2,3-dicarboxybenzoyl)phenyl]sulphone.

Amongst the tetracarboxylic acid reactants the aliphatic tetracarboxylic acids are preferred in the process of the invention, particularly 1,2,3,4-butanetetracarboxylic acid.

The degree in which the N-R-N moieties in the polymer backbone can be substituted by the other units comprising the tri- or tetracarboxylic acid moieties and the amine moieties will normally be varied within the range of from 5 to 95% of the total number but will preferably be from 30 to 70%.

The copolymers and terpolymers of this invention are thermoplastic polymers having an average molecular weight of from 1000 to 100,000 and find utility in the applications normally associated with thermoplastics. They can be processed by the usual methods such as extrusion, injection moulding and thermoforming into films, sheets and moulded articles and they are also useful in adhesive formulations. However, because of their relatively high glass transition temperatures they are particularly useful as engineering thermoplastics for applications where elevated temperatures are likely to be encountered including the production of containers for food and drink, base materials for electrical and electronic applications and shaped parts for automotive usage.

### Example 1

A mixture of 17.4 g (0.1 mole) of 4-oxoheptanedioic acid, 19.8 g (0.1 mole) of di(4-aminophenyl)methane and 50 ml of m-cresol was placed in a 100 ml resin pot equipped with a mechanical stirrer and a condenser. While being stirred, the mixture was warmed to 200 °C and the water formed was removed by azeotropic distillation with a portion of the m-cresol. The resulting mixture was refluxed for 12 hours, cooled, and then poured into 1 litre of methanol. The precipitated product was recovered by filtration and dried in a vacuum oven at 150 °C for 24 hours. The glass transition temperature of the product was 242 °C and the nuclear magnetic resonance spectra of samples of the product showed the repeating alternating linear structure

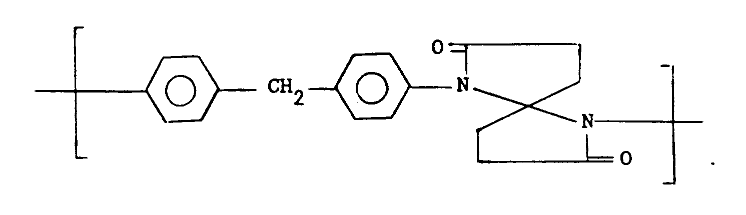

### Example 2

A mixture of 7.81 g (0.05 mole) of 1,6-dioxospiro[4,4]nonane-2,7-dione, 9.91 g (0.05 mole) of di(4-aminophenyl)methane and 50 ml of m-cresol was placed in a 100 ml resin pot equipped with a mechanical stirrer and a condenser. While being stirred, the mixture was warmed to 200 °C and the water produced was removed by azeotropic distillation with a portion of the m-cresol. The resulting mixture was refluxed for 12 hours, cooled, and then poured into 1 litre of methanol. The precipitated product was recovered by filtration and dried in a vacuum oven at 150 °C for 24 hours. The product had a glass transition temperature of 250 °C and nuclear magnetic resonance spectra of the product were consistent with the structure shown in Example 1.

### Example 3

A mixture of 10.3 g (0.05 mole) of bis(4-aminocyclohexyl)methane, 7.81 g (0.05 mole) of 1,6-dioxaspiro[4,4]nonane-2,7-dione and 100 ml of N-methyl-2-pyrrolidone is placed in a 500 ml round-bottomed flask equipped with a mechanical stirrer and a condenser. The mixture, while being stirred, was warmed to 200 °C and the water produced was removed by azeotropic distillation with a portion of the N-methyl-2-pyrrolidone. The resulting mixture was refluxed for 24 hours, then cooled, and poured into 3 litres of water. The precipitated product was recovered by filtration and dried in a vacuum oven at 110 °C for 24 hours. The glass transition temperature of the product was 239 °C and nuclear magnetic resonance spectra of the product were consistent with the repeating structure

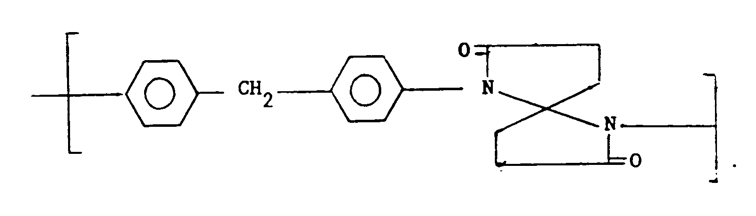

### Example 4

A mixture of 17.4 g (0.1 mole) of 4-oxoheptanedioic acid, 19.2 g (0.1 mole) of trimellitic anhydride, 39.6 g (0.2 mole) of di(4-aminophenyl)methane, 2 ml of nitric acid, 60 ml of ethylbenzene and 200 ml of N-methyl-2-pyrrolidone was heated, while being stirred, to 160-170 °C and the water present or formed was removed by azeotropic distillation. When the water removal was complete the temperature of the mixture was raised to 180-190 °C and maintained at that temperature for 12 hours. After cooling, the resulting mixture was poured into methanol. The polymer product was recovered by filtration, washed with methanol and dried in a vacuum oven at 70 °C for 12 hours. The polymer product had a glass transition temperature of 273 °C. The nuclear magnetic resonance spectra were consistent with the repeating structures

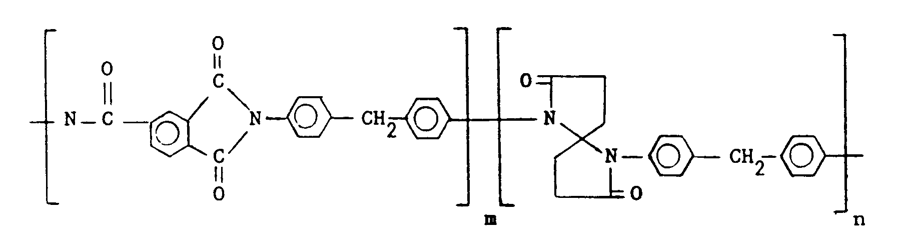

### Example 5

A mixture of 17.4 g (0.1 mole) of 4-oxoheptanedioic acid, 23.4 g (0.1 mole) of 1,2,3,4-butanetetracarboxylic acid and 39.65 g (0.2 mole) of di(4-aminophenyl)methane, 200 ml of N-methyl-2-pyrrolidone, 60 ml of ethylbenzene and 2 ml of nitric acid was placed in a resin pot equipped with a mechanical stirrer and a condenser. While being stirred, the mixture was warmed to 170-180 °C and maintained for 16 hours as water was removed by azeotropic distillation. The resulting mixture was then cooled and poured into 1 litre of methanol. The precipitated product was then dried at 100 °C for 24 hours in a vacuum oven. The poly(amideimide) polymer had a glass transition temperature of 270 °C and nuclear magnetic resonance spectra were consistent with the repeating structures

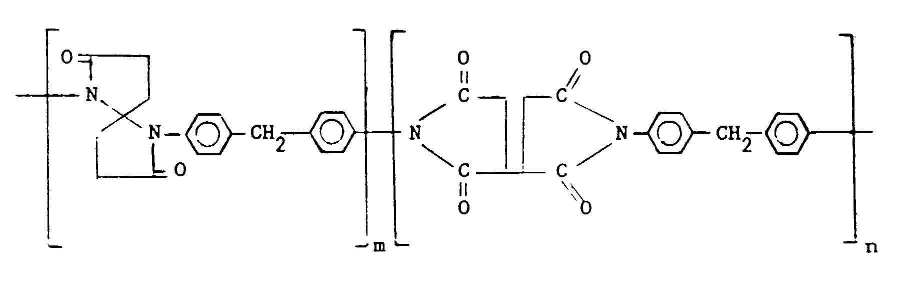

## Claims

1. A 1,6-diaza[4,4]spirodilactam polymer of the repeating formula 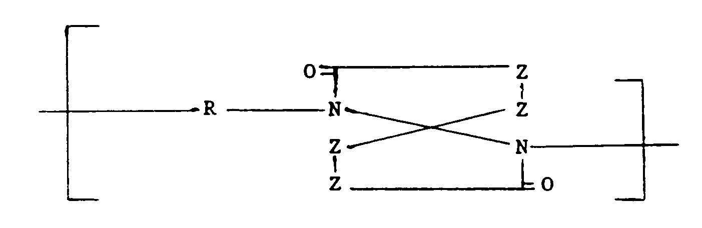 wherein each Z independently is 〉C(Z')₂ in which each Z' independently is hydrogen, C₁-C₄ alkyl or halogen or such that two adjacent Z atoms taken together are part of a benzene ring, R is a divalent organic group of up to 30 carbon atoms selected from divalent alkylene, divalent arylene of from 1 to 2 aromatic rings which, when two rings are present, are connected by a direct valence bond or by an alkylene group of up to 8 carbon atoms, or by an oxo, thio, sulphonyl, carbonyl, dioxyphenylene, 2,2-di(oxyphenyl)propane, di(oxyphenyl)sulphone or dioxydiphenylene atom or group.

2. The polymer of claim 1 wherein each Z' is hydrogen.

3. The polymer of claim 1 or 2 wherein R is di(4-phenyl)ethane or di(4-phenyl)methane, or 2,2-di(4-phenyl)propane.

4. The polymer of claim 1, wherein the spirodilactam moiety is 3,4,8,9-dibenzo-1,6-diazaspiro[4,4]nonane-2,7-dione.

5. A polymer as claimed in claim 1, wherein part of the groups R have been substituted by a group selected from 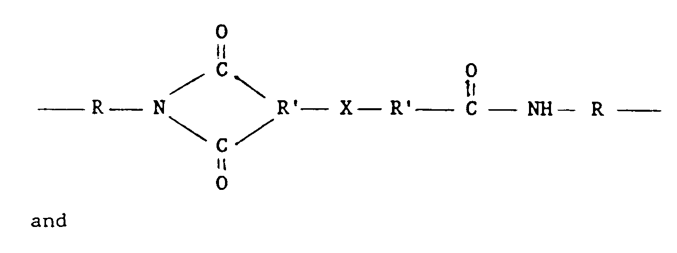 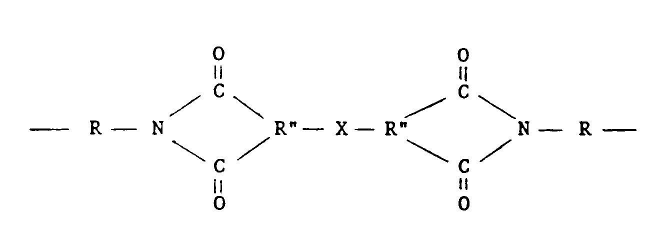 in which R' is a benzene or naphthalene ring structure, R'' is an alkylene or haloalkylene group of up to 8 carbon atoms and X is R', R'' or an aromatic group of up to 4 aromatic rings which, when at least two rings are present are connected by a direct valence bond or by an alkylene group of up to 8 carbon atoms or by an oxo, thio, sulphonyl, carbonyl, oxocarbonyl, dioxyphenylene, 2,2-di(oxyphenyl)propane, di(oxyphenyl)sulphone or dioxydiphenylene atom or group.

6. A process for preparing a polymer as claimed in any one of claims 1 to 5 which comprises reacting a spirodilactam precursor selected from 4-oxo-heptanedioic acid compounds and 1,6-dioxaspiro [4,4]nonane-2,7-dione compounds with a primary diamine having the formula H₂N-R-NH₂, in which the two amine groups are not on adjacent carbon atoms.

7. A process for preparing a polymer as claimed in claim 5, which comprises reacting a spirodilactam precursor selected from 4-oxo-heptanedioic acid compounds and 1,6-dioxaspiro[4,4]nonane-2,7-dione compounds with a primary diamine of formula H₂N-R-NH₂, in which the two amine groups are not on adjacent carbon atoms, in the presence of a tricarboxylic or tetracarboxylic acid of formula 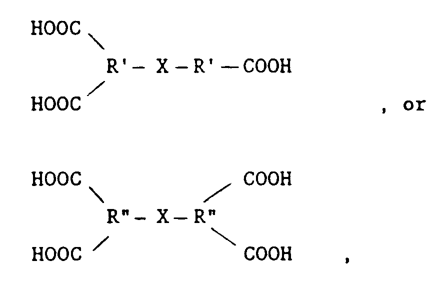 or with an anhydride thereof.

## Patentansprüche

1. Ein 1,6-Diaza[4,4]spirodilactampolymer der sich wiederholenden Formel 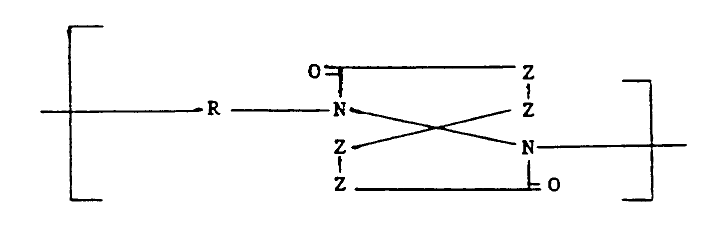 in der jedes Z unabhängig voneinander =C(Z')₂ ist, wobei jedes Z' unabhängig voneinander Wasserstoff, C₁-C₄-Alkyl oder Halogen oder solch ein Rest ist, daß zwei benachbarte Z-Atome zusammengenommen Teil eines Benzolringes sind, R eine zweiwertige organische Gruppe von bis zu 30 Kohlenstoffatomen ist, ausgewählt aus zweiwertigem Alkylen, zweiwertigem Arylen von 1 bis 2 aromatischen Ringen, die - wenn zwei Ringe vorliegen - durch eine direkte Valenzbindung oder durch eine Alkylengruppe von bis zu 8 Kohlenstoffatomen oder durch ein Sauerstoff- oder Schwefelatom oder durch eine Sulfonyl-, Carbonyl-, Dioxyphenylen-, 2,2-Di-(oxyphenyl)-propan-, Di-(oxyphenyl)-sulfon- oder Dioxydiphenylengruppe verbunden sind.

2. Das Polymer von Anspruch 1, wobei jedes Z' Wasserstoff ist.

3. Das Polymer von Ansprch 1 oder 2, wobei R Di(4-phenyl)-ethan oder Di-(4-phenyl)-methan oder 2,2-Di-(4-phenyl)-propan ist.

4. Das Polymer von Anspruch 1, wobei der Spirolactamanteil 3,4,8,9-Dibenzo-1,6-diazaspiro[4,4]nonan-2,7-dion ist.

5. Ein Polymer wie in Anspruch 1 beansprucht, wobei zum Teil die Gruppen R substituiert worden sind durch eine Gruppe, ausgewählt aus 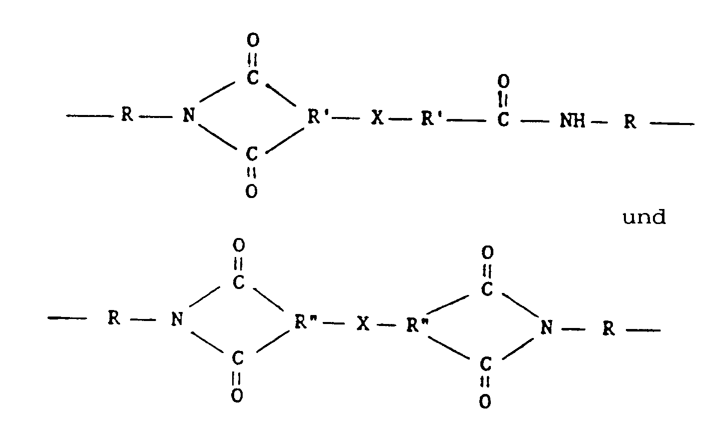 in denen R' eine Benzol- oder Naphthalinringstruktur ist, R'' eine Alkylen- oder Halogenalkylengruppe von bis zu 8 Kohlenstoffatomen ist und X gleich R', R'' oder eine aromatische Gruppe von bis zu 4 aromatischen Ringen ist, die - wenn wenigstens zwei Ringe vorliegen - durch eine direkte Valenzbindung oder durch eine Alkylengruppe von bis zu 8 Kohlenstoffatomen oder durch ein Sauerstoff- oder Schwefelatom oder durch eine Sulfonyl-, Carbonyl-, Oxocarbonyl-, Dioxyphenylen-, 2,2-Di-(oxyphenyl)-propan-, Di-(oxyphenyl)-sulfon- oder Dioxydiphenylengruppe verbunden sind.

6. Ein Verfahren zur Herstellung eines Polymers wie in irgendeinem der Ansprüche 1 bis 5 beansprucht, das umfaßt Umsetzen einer Spirodilactamvorstufe, ausgewählt aus 4-Oxo-heptandisäureverbindungen und 1,6-Dioxaspiro[4,4]nonan-2,7-dionverbindungen, mit einem primären Diamin der Formel H₂N-R-NH₂, bei dem die beiden Aminogruppen nicht an zwei benachbarten Kohlenstoffatomen sind.

7. Ein Verfahren zur Herstellung eines Polymers wie in Anspruch 5 beansprucht, das umfaßt Umsetzen einer Spirodilactamvorstufe, ausgewählt aus 4-Oxo-heptandisäureverbindungen und 1,6-Dioxaspiro[4,4]-nonan-2,7-dionverbindungen mit einem primären Diamin der Formel H₂N-R-NH₂, bei dem die beiden Aminogruppen nicht an benachbarten Kohlenstoffatomen sind, in Gegenwart einer Tricarbon- oder Tetracarbonsäure der Formeln 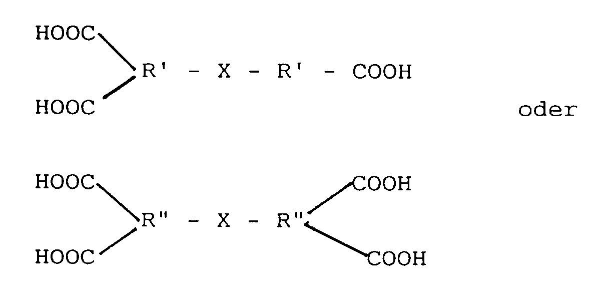 oder deren Anhydride.

## Revendications

1. Un polymère de 1,6-diaza(4,4)spirodilactame de la formule de maille 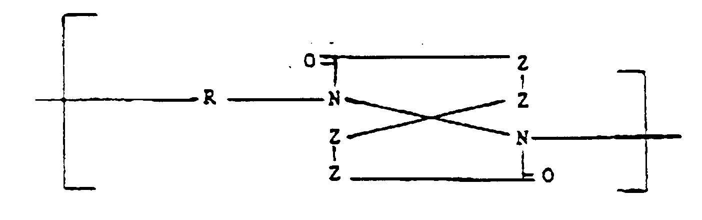 où chaque Z indépendamment est 〉C(Z')₂ où chaque Z' indépendamment est de l'hydrogène, un groupe alcoyle en C₁-C₄ ou un halogène, ou deux atomes Z adjacents pris ensemble font partie d'un noyau benzénique, R est un groupe organique divalent ayant jusqu'à 30 atomes de carbone choisi parmi un groupe alcoylène divalent, un groupe arylène divalent ayant 1 ou 2 noyaux aromatiques qui, quand deux noyaux sont présents, sont reliés par une liaison de valence directe ou par un groupe alcoylène ayant jusqu'à 8 atomes de carbone, ou par un atome ou groupe oxo, thio, sulfonyle, carbonyle, dioxyphénylène, 2,2-di(oxyphényl)propane, di(oxyphényl)sulfone ou dioxydiphénylène.

2. Un polymère selon la revendication 1, dans lequel chaque Z' est de l'hydrogène.

3. Un polymère selon la revendication 1 ou 2, dans lequel R est un groupe di(4-phényl)éthane, di(4-phényl)méthane ou 2,2-di(4-phényl)propane.

4. Un polymère selon la revendication 1, dans lequel la portion spirodilactame consiste en 3,4,8,9-dibenzo-1,6-diazaspiro(4,4)nonane-2,7-dione.

5. Un polymère selon la revendication 1, dans lequel certains des groupes R ont été remplacés par un groupe choisi parmi 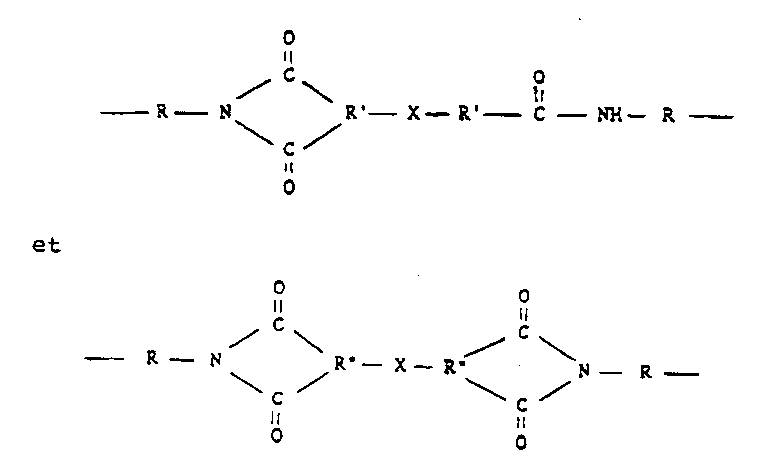 où R' est une structure cyclique benzénique ou naphtalénique, R'' est un groupe alcoylène ou haloalcoylène ayant jusqu'à 8 atomes de carbone et X est R', R'' ou un groupe aromatique comprenant jusqu'à 4 noyaux aromatiques qui, quand au moins deux noyaux sont présents, sont reliés par une liaison de valence directe ou par un atome ou groupe oxo, thio, sulfonyle, carbonyle, oxocarbonyle, dioxyphénylène, 2,2-di(oxyphényl)propane, di(oxyphényl)sulfone ou dioxydiphénylène.

6. Un procédé pour la préparation d'un polymère tel que revendiqué dans l'une quelconque des revendications 1 à 5, qui comprend la réaction d'un progéniteur de spirodilactame choisi parmi des acides 4-oxo-heptane-dioïques et des 1,6-dioxaspiro(4,4)nonane-2,7-diones avec une diamine primaire de formule H₂N-R-NH₂, où les deux groupes amine ne sont pas sur des atomes de carbone adjacents.

7. Un procédé pour la préparation d'un polymère tel que revendiqué dans la revendication 5, qui comprend la réaction d'un progéniteur de spirodilactame choisi parmi des acides 4-oxo-heptane-dioïques et des 1,6-dioxaspiro (4,4)nonane-2,7-diones avec une diamine primaire de formule H₂N-R-NH₂, où les deux groupes amine ne sont pas sur des atomes de carbone adjacents en présence d'un acide tricarboxylique ou tétracarboxylique de formule 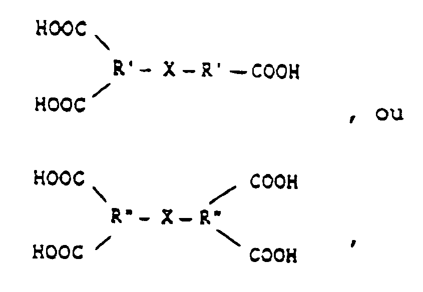 ou avec un anhydride de ces acides.
